# EUROPÄISCHE PATENTSCHRIFT

(11) **EP 3 231 574 B1**
(45) Veröffentlichungstag und Bekanntmachung des Hinweises auf die Patenterteilung: **31.10.2018**
(21) Anmeldenummer: 17164651.6
(22) Anmeldetag: 03.04.2017
(51) Int. Cl.: B29C 45/28

(54) **FÜHRUNGSBUCHSE FÜR EINE SPRITZGIESSVORRICHTUNG**
GUIDE BUSHING FOR AN INJECTION MOULDING APPARATUS
DOUILLE DE GUIDAGE POUR UN DISPOSITIF DE MOULAGE PAR INJECTION

(30) Priorität: 12.04.2016 DE 102016106745
(43) Veröffentlichungstag der Anmeldung: 18.10.2017
(73) Patentinhaber: GÜNTHER Heisskanaltechnik GmbH, 35066 Frankenberg (DE)
(72) Erfinder: GÜNTHER, Herbert, 35108 Allendorf (DE); SOMMER, Siegrid, 35099 Burgwald (DE); SCHNELL, Torsten, 35104 Lichtenfels (DE)
(74) Vertreter: Patentanwälte Olbricht Buchhold Keulertz

(56) Entgegenhaltungen:
- DE-U1- 20 118 609
- DE-U1-202006 017 380

## Beschreibung

Die Erfindung betrifft eine Führungsbuchse gemäß dem Oberbegriff von Anspruch 1, sowie eine Spritzgießvorrichtung mit einer solchen Führungsbuchse gemäß dem Oberbegriff des Anspruchs 8.

Spritzgießvorrichtungen verfügen oft über Nadelverschlussdüsen, mit deren Hilfe eine fließfähige Masse bei einer vorgebbaren Temperatur unter hohem Druck einem trennbaren Formeinsatz zugeführt wird. Die Nadelverschlussdüsen haben pneumatisch, hydraulisch oder elektrisch angetriebene Verschlussnadeln, die Angussöffnungen im Formeinsatz periodisch öffnen und verschließen. Dies ermöglicht genaueste Material-Dosierungen, insbesondere bei rascher Schussfolge. Man kann die fließfähige Masse aber auch segmentiert einspritzen, z. B. beim Kaskadenguss durch definiert gesteuertes Öffnen und Schließen des Anspritzpunktes. Jede Verschlussnadel ist im werkzeugseitigen Bereich der Spritzgießvorrichtung axial verschieblich gelagert und im düsenseitigen Bereich bevorzugt mittig durch einen Strömungskanal für die zu verarbeitenden Masse hindurchgeführt (siehe hierzu beispielsweise DE 3 249 486 C3 oder DE 3 403 603 A1). Der Strömungskanal endet meist in einem Düsenmundstück, das endseitig eine Düsenaustrittsöffnung bildet. In Schließrichtung greift das untere Ende der Verschlussnadel in einen Dichtsitz ein, der im Düsenmundstück oder im Formeinsatz ausgebildet ist.

Zur dichten Führung der Verschlussnadel ist in der Verteilerplatte der Spritzgießvorrichtung gewöhnlich eine Führungsbuchse bzw. Dichtungshülse eingesetzt, die den zylindrischen Schaft der Verschlussnadel aufnimmt (siehe hierzu beispielsweise DE 39 26 357 A1, DE 201 18 609 U1 oder EP 1 223 020 B1). Zwischen der Verschlussnadel und der Führungsbuchse verbleibt ein Freiraum in Form eines Hohlzylinders, in den während des Betriebs der Spritzgießvorrichtung fließfähiges Material eindringt, so dass die Nadel gegenüber dem Strömungskanal abgedichtet wird. Zugleich entsteht ein Schmiereffekt, der die Reibung zwischen der Verschlussnadel und der Buchse herabsetzt.

Aus der DE 20 2006 017 380 U1 ist es ferner bekannt, in einer Führungsbuchse für die Verschlussnadel einer Nadelverschlussdüse wenigstens einen Führungsabschnitt vorzusehen, der die Verschlussnadel mit geringem Bewegungsspiel umfasst, sowie wenigstens zwei Erweiterungsabschnitte, deren Durchmesser größer ist, als derjenige des wenigstens einen Führungsabschnitts. Die Erweiterungsabschnitte dienen dabei als Aufnahmeräume für das fließfähige Material in der Durchgangsöffnung. Durch Verwendung einer Vielzahl solcher Erweiterungsabschnitte kann durch das in den Aufnahmeräumen gesammelte, fließfähige Material zum einen eine Schmierfunktion für die Verschlussnadel sichergestellt werden, während gleichzeitig die kumulative Dichtwirkung der mit fließfähigem Material gefüllten Erweiterungsabschnitte verbessert wird.

Trotz optimaler Ausbildung eines solchen Dichtsystems lässt es sich aufgrund der relativ hohen Drücke innerhalb des Werkzeugs und aufgrund der Hubbewegungen der Nadel sowie der verwendeten niederviskosen Materialien nicht vermeiden, dass die zu verarbeitende Masse durch die Führungs- und Dichtbuchse hindurch nach außen dringt. Materialverluste sind die Folge. Zudem verunreinigen die Materialreste sowohl die Verschlussnadel als auch das Werkzeug, was nicht nur die Dichtwirkung beeinträchtigt, sondern auf Dauer die Öffnungs- und Schließbewegung der Verschlussnadel behindern kann. Aufwendige Reinigungs- oder Wartungsarbeiten sind unvermeidlich.

Ziel der Erfindung ist es, diese und weitere Nachteile des Standes der Technik zu vermeiden und die Führung und Abdichtung von Verschlussnadeln in einer Spritzgießvorrichtung weiter zu verbessern. Angestrebt wird insbesondere eine Dichtungsanordnung, die mit einfachen Mitteln kostengünstig aufgebaut und leicht zu handhaben ist.

Hauptmerkmale der Erfindung sind im kennzeichnenden Teil von Anspruch 1, sowie Anspruch 8 angegeben. Ausgestaltungen sind Gegenstand der Ansprüche 2 bis 7, sowie 9 bis 15.

In einem ersten Aspekt betrifft die Erfindung eine Führungsbuchse zum Durchführen und Abdichten einer Verschlussnadel einer Nadelverschlussdüse einer Spritzgießvorrichtung. Die Führungsbuchse weist dabei einen Hauptteil mit einer Durchgangsöffnung für die Verschlussnadel auf, wobei die Durchgangsöffnung wenigstens einen Führungsabschnitt aufweist, der die Verschlussnadel mit geringem Bewegungsspiel umfasst. Die Durchgangsöffnung weist ferner wenigstens zwei Erweiterungsabschnitte auf, deren Durchmesser jeweils größer ist als derjenige des wenigstens einen Führungsabschnitts.

Erfindungsgemäß weist die Führungsbuchse ferner ein Befestigungselement auf, welches an dem Hauptteil festgelegt werden kann, wobei zwischen dem Befestigungselement und dem Hauptteil ein Dichtungselement angeordnet ist, welches an einer in die Durchgangsöffnung eingesetzten Verschlussnadel vollumfänglich anliegt.

Dabei wird die Verschlussnadel vorzugsweise von den Führungsabschnitten mit geringst möglichem Bewegungsspiel umfasst, sodass das Spiel der Verschlussnadel vorzugsweise nur wenige µm beträgt. Die Erweiterungsabschnitte weisen beispielsweise einen Durchmesser auf, welcher 0,5 mm bis 3 mm, insbesondere 1 mm bis 2,5 mm größer ist, als der Durchmesser der Führungsabschnitte.

Der bzw. die Führungsabschnitte gewährleisten eine gute und stets sichere Führung der Verschlussnadel innerhalb der Führungsbuchse. Die Erweiterungsabschnitte hingegen können gezielt fließfähiges Material aufnehmen, das die Reibungskräfte innerhalb der Führungsbuchse herabsetzt. Die darin gleitgeführte Verschlussnadel wird damit stets ausreichend geschmiert. Durch das zusätzliche Dichtungselement, welches mittels eines Befestigungselements in der Führungsbuchse festgelegt ist, kann dabei gewährleistet werden, dass eine möglicherweise unzureichende Dichtwirkung des in den Erweiterungsabschnitten angesammelten, fließfähigen Materials kompensiert wird, sodass kein fließfähiges Material aus der Führungsbuchse in den Bereich oberhalb der Führungsbuchse austritt. Aufwendige Reinigungs- oder Wartungsarbeiten entfallen somit.

Dabei ist nach einer Ausführungsform das Befestigungselement zumindest abschnittsweise hohlzylindrisch ausgebildet und weist auf einer äußeren Mantelfläche ein Außengewinde auf. Bei entsprechender Auslegung einer Aufnahme für die Führungsbuchse in einer Spritzgießvorrichtung kann so das Befestigungselement in der Spritzgießvorrichtung, beispielsweise in einer Verteilerplatte auf einfache Art und Weise sicher befestigt werden, indem es in die Aufnahme eingeschraubt wird. Zur Festlegung der Führungsbuchse in einer solchen Aufnahme kann dann beispielsweise das Befestigungselement auf den Hauptteil aufgesetzt und anschließend in die Aufnahme eingeschraubt werden. Auf diese Weise kann das Befestigungselement die Führungsbuchse auf einfache Art und Weise in einer Aufnahme einer Spritzgießanlage festgelegt werden. Die Fertigung solcher Gewinde ist dabei leicht zu bewerkstelligen, sodass keine hohen Produktionskosten für die Herstellung der Führungsbuchse entstehen.

Nach einer weiteren Ausführungsform weist das Befestigungselement einen umlaufenden Flanschrand auf, wobei der Flanschrand dazu ausgebildet ist, bei Festlegung des Befestigungselements an dem Hauptteil und einschrauben des Befestigungselements in einer entsprechenden Aufnahme das Dichtungselement mit einer Kraft in Richtung auf den Hauptteil zu beaufschlagen. Durch Eingrenzung des Raums, in den sich das Dichtungselement ausbreiten kann, kann so das Dichtungselement gleichzeitig in Richtung der Verschlussnadel gepresst werden. Bei entsprechender Verformbarkeit des Dichtungselements kann so die Auflagefläche des Dichtungselements an der Verschlussnadel vergrößert und die Dichtwirkung des Dichtungselements verbessert werden.

Dabei besteht nach einer weiteren Ausführungsform das Dichtungselement vorzugsweise aus einem Elastomer. Beispielsweise kann das Dichtungselement aus Vulkanisaten von Natur- oder Silikonkautschuk, Polyethylen (PE), oder Polytetrafluorethylen (PTFE) bestehen.

Nach einer weiteren Ausführungsform ist das Dichtungselement ringförmig. Beispielsweise kann so ein handelsüblicher O-Ring als Dichtungselement verwendet werden. Voraussetzung ist hierbei jedoch, dass sich der Innendurchmesser des verwendeten O-Rings nicht wesentlich von dem Durchmesser der Verschlussnadel unterscheidet. Andernfalls ist die Dichtwirkung des Dichtungselements möglicherweise aufgrund einer unterbrochenen Kontaktfläche mit der Verschlussnadel unzureichend. Beispielsweise kann ein Elastomer-Dichtungsring wie Kalrez 7075 verwendet werden, der sich durch eine hohe Temperaturbeständigkeit auszeichnet und somit den in einer Spritzgussanlage vorherrschenden hohen Temperaturen widerstehen kann.

Nach einer weiteren Ausführungsform weist das Befestigungselement an einer äußeren Mantelfläche ein Außengewinde auf. Durch Verwendung eines auf das Außengewinde aufschraubbaren Entnahmewerkzeugs kann so eine Entnahme des Hauptteils der Führungsbuchse aus einer Spritzgießanlage vereinfacht werden.

Nach einer weiteren Ausführungsform weisen die Führungsabschnitte jeweils einen zylindrischen Innenumfang auf, der koaxial zu der Verschlussnadel ausgerichtet ist. Weiter können die Erweiterungsabschnitte nach einer weiteren Ausführungsform jeweils die Form einer ringförmigen oder hohlzylindrischen Aussparung aufweisen, so dass die Verschlussnadel im Bereich der Erweiterungsabschnitte stets gleichmäßig von fließfähigem Material umgeben ist.

Nach einer weiteren Ausführungsform sind die Erweiterungsabschnitte entlang einer Längsachse des Hauptteils in gleichmäßigen Abständen zueinander angeordnet, was sich weiter günstig auf die Dichtwirkung auswirkt.

Vorzugsweise sind dabei der Hauptteil und/oder das Befestigungselement einteilig ausgebildet, was die Stabilität des Hauptteils und/oder des Befestigungselements verbessert.

In einem weiteren Aspekt betrifft die Erfindung eine Spritzgießvorrichtung mit einer Verteilerplatte, in der wenigstens ein Strömungskanal für ein fließfähiges Material ausgebildet ist, mit wenigstens einer Nadelverschlussdüse, durch die das fließfähige Material unter Fortführung des Strömungskanals einem trennbaren Formeinsatz zuführbar ist, mit wenigstens einer Verschlussnadel, die den Strömungskanal zumindest abschnittsweise längsverschieblich durchsetzt und die mittels eines Antriebs in eine Öffnungs- und in eine Schließstellung bringbar ist, wobei die Spritzgießvorrichtung eine Führungsbuchse mit den zuvor beschriebenen Merkmalen aufweist.

Eine Ausführungsform der Erfindung sieht dabei vor, dass ein Führungsabschnitt der Führungsbuchse zumindest abschnittsweise im Strömungskanal liegt. Dadurch steht ein Bereich der Führungsbuchse stets in direktem Kontakt mit dem fließfähigen Material, das bei jedem Spritzvorgang Druck auf die Führungsbuchse ausübt. Dies führt dazu, dass der Kontaktbereich unter Überwindung des geringen Bewegungsspiels dichtend gegen die Verschlussnadel gepresst wird, so dass während der Hochdruckphase kein Material mehr durch die Führungsbuchse hindurch aus der Spritzgießvorrichtung nach außen dringen kann.

Mit Vorteil hat oder bildet der Führungsabschnitt wenigstens eine Kontaktfläche für das fließfähige Material, die ebenfalls zumindest abschnittsweise im Strömungskanal liegt. Das zu verarbeitende Material kann mithin unmittelbar auf die Kontaktfläche einwirken und die Führungsbuchse in diesem Bereich wie ein Rückschlagventil betätigen. Die Kontaktfläche ist dabei bevorzugt vom Außenumfang des Führungsabschnitts gebildet, wobei der Außenumfang eine Schrägfläche ist, beispielsweise eine Kegelfläche.

Besondere Vorteile ergeben sich, wenn der Führungsabschnitt und/oder die Kontaktfläche allseits von fließfähigem Material umströmt werden. Letzteres kann dadurch gleichmäßig auf die Führungsbuchse bzw. auf die Kontaktfläche einwirken, so dass der in den Strömungsbereich hinein ragende Bereich gleichmäßig über den gesamten Umfang der Verschlussnadel angepresst wird. Die Nadel ist allseits gedichtet und in ihrer Mittellage zentriert.

Dazu trägt auch bei, wenn der Bereich einen zylindrischen Innenumfang aufweist, der koaxial zur Verschlussnadel ausgerichtet ist. Dieser Innenumfang bildet mithin nicht nur eine Dichtfläche zwischen der Nadel und der Führungsbuchse, sondern auch ein Zentrierelement für die Nadel.

Konstruktiv ist es von Vorteil, wenn der Führungsabschnitt mit der Kontaktfläche radial oder axial in den Strömungskanal hineinragt. Dies vereinfacht nicht nur den Aufbau der Führungsbuchse, sondern auch deren Montage, was sich insgesamt günstig auf die Herstell- und Montagekosten auswirkt.

Eine vorteilhafte Weiterbildung sieht vor, dass der in den Strömungskanal hineinragende Bereich einen Endbereich der Führungsbuchse bildet, wobei die Kontaktfläche vom Außenumfang des Bereichs gebildet ist.

Bei der Führungsbuchse handelt es sich vorteilhaft um ein separat austauschbares Bauelement. Als Verschleißelement kann die Führungsbuchse somit im Bedarfsfall jederzeit rasch und bequem einzeln ersetzt werden, ohne dass gleichzeitig weitere Bauteile ausgetauscht werden müssen, wie beispielsweise die Verschlussnadel, die gesamte Düse, die Verteilerplatte oder ein darin eingepresstes Bauteil.

Die Führungsbuchse ist zweckmäßig an und/oder in der Verteilerplatte festlegbar, wobei die Festlegung bevorzugt lösbar ausgebildet ist. Sie sitzt hierzu in einer Aussparung in der Verteilerplatte und/oder in der Nadelverschlussdüse, in der sie mit geeigneten Mitteln fixierbar ist.

Die Führungsbuchse kann zumindest teilweise von der Verteilerplatte nach außen vorstehen, so dass ein Wärmeaustausch zwischen der Führungsbuchse und der Umgebung möglich ist, beispielsweise um eine Abkühlung der Führungsbuchse zu erlangen oder zu unterstützen. Nach einer Ausführungsform liegt dabei ein Führungsabschnitt der Führungsbuchse zumindest abschnittsweise im Strömungskanal.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigt:

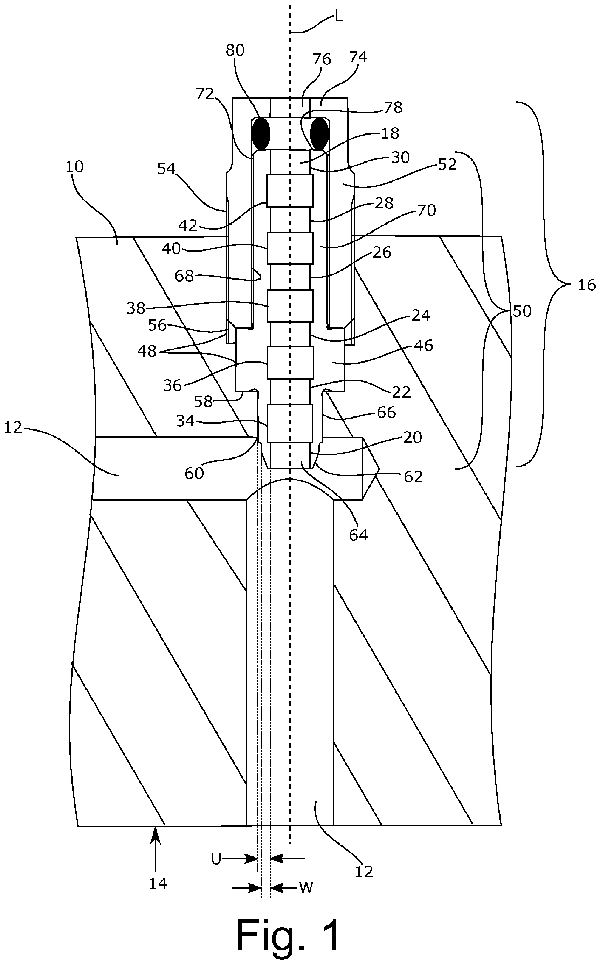

Fig. 1 eine schematische Querschnittansicht einer Ausführungsform einer Führungsbuchse.

Die in Fig. 1 im Querschnitt gezeigte Anordnung ist Teil einer Spritzgießvorrichtung, die zur Herstellung von Formteilen aus einer fließfähigen Masse dient, beispielsweise einer Kunststoffschmelze. Die Spritzgießvorrichtung umfasst eine Verteilerplatte 10, in der ein System von Strömungskanälen 12 ausgebildet ist. Der in Fig. 1 dargestellte Strömungskanal 12 erstreckt sich abschnittsweise horizontal und mündet vertikal in einer (nicht dargestellten) Nadelverschlussdüse, die an der Unterseite 14 der Verteilerplatte 10 montiert ist.

Jede Nadelverschlussdüse hat einen (ebenfalls nicht gezeigten) bevorzugt außen-beheizten Düsenkörper, in dem konzentrisch zur Längsachse L ein Materialrohr zur Fortsetzung des sich senkrecht erstreckenden Strömungskanals 12 ausgebildet ist. Letzterer endet in einem Düsenmundstück, das endseitig eine Düsenaustrittsöffnung bildet, über die das zu verarbeitende Material durch eine Angussöffnung hindurch einem trennbaren (gleichfalls nicht gezeichneten) Formeinsatz zugeführt wird.

Zum Öffnen und Schließen der bevorzugt in dem Formeinsatz ausgebildeten Angussöffnung verfügt die Spritzgießvorrichtung über eine nicht dargestellte Verschlussnadel, die den Strömungskanal im Materialrohr der Nadelverschlussdüse sowie den sich in Fig. 1 vertikal erstreckenden Abschnitt des Strömungskanals 12 in der Verteilerplatte 10 längsverschieblich durchsetzt und von einem (nicht gezeigten) mechanischen, elektrischen, pneumatischen oder hydraulischen Antrieb in eine Schließ- und Öffnungsstellung bringbar ist. In Schließstellung greift die Verschlussnadel mit einem endseitig ausgebildeten Verschlussteil durch die Düsenaustrittsöffnung hindurch dichtend in die Angussöffnung ein.

Im werkzeugseitigen Bereich ist die Verschlussnadel durch die Verteilerplatte 10 und durch eine nicht dargestellte Aufspannplatte hindurch mit dem Antrieb verbunden, der die Nadel periodisch auf und ab bewegt.

Zur Führung und Abdichtung der Verschlussnadel ist in die Verteilerplatte 10 eine Führungsbuchse 16 eingesetzt. Diese hat in einem Hauptteil 50 eine zentrische Durchgangsbohrung 18, deren Innendurchmesser in Führungsabschnitten 20, 22, 24, 26, 28 und 30 der Führungsbuchse 16 bis auf ein geringes Bewegungsspiel, das bevorzugt im Mikrometer-Bereich liegt, dem Außendurchmesser der Verschlussnadel entspricht, welche sich in bestimmungsgemäßem Zustand der Spritzgießvorrichtung durch die Führungsbuchse 16 hindurch erstreckt. Die Verschlussnadel findet damit innerhalb des Hauptteils 50 eine stets präzise und zentrische Führung.

Zwischen den einzelnen Führungsabschnitten 20, 22, 24, 26, 28, 30, die vorzugsweise entlang der Längsachse L in gleichmäßigen Abständen zueinander liegen, sind axial Erweiterungsabschnitte 34, 36, 38, 40, und 42 ausgebildet, deren jeweiliger Innendurchmesser geringfügig größer ist, als der Außendurchmesser der Verschlussnadel. Die Tiefe der einzelnen Erweiterungsabschnitte 34, 36, 38, 40, 42 liegt in radialer Richtung der Durchgangsbohrung 18 beispielsweise im Bereich zwischen 0,5 mm und 3 mm, oder zwischen 1,5 mm und 2,5 mm.

Die in dem Hauptteil 50 der Führungsbuchse 16 ausgebildeten Erweiterungsabschnitte 34, 36, 38, 40, 42 nehmen während des Betriebs der Spritzgießvorrichtung fließfähiges Material aus dem Strömungskanal 12 auf, was zur Abdichtung der Verschlussnadel gegenüber dem Strömungskanal 12 und der Werkzeugumgebung führt. Diese Dichtwirkung wird noch dadurch verstärkt, dass vom untersten Erweiterungsabschnitt 34 zum obersten Erweiterungsabschnitt 42 ein abfallendes Druckgefälle vorhanden ist. Gleichzeitig wirkt die fließfähige Masse innerhalb der Erweiterungsabschnitte 34, 36, 38, 40, und 42 als Gleitmittel, so dass die Reibung zwischen der Verschlussnadel und dem Hauptteil der Führungsbuchse 16 herabgesetzt wird. Während des Betriebs wird die in den Erweiterungsabschnitten 34, 36, 38, 40 und 42 vorhandene Masse bei der Aufwärts- und Abwärtsbewegung der Verschlussnadel nicht mitbewegt, weshalb keine Pumpwirkung erzeugt wird.

Der Hauptteil 50 der Führungsbuchse 16 hat einen verbreiterten Flansch 46, der zentrisch in einer entsprechenden Aussparung 48 in der Verteilerplatte 10 sitzt. Über dem Flansch 46 weist der Hauptteil 50 einen im Außendurchmesser kleineren Halsabschnitt 70 auf, der koaxial von einem Befestigungselement 52 umschlossen ist, welches in der dargestellten Ausführungsform als Schraubbuchse ausgebildet ist. Das Befestigungselement 52 weist dabei eine hohlzylindrische Grundform auf.

Das Befestigungselement 52 weist ferner an seiner Oberseite einen umlaufenden Flanschrand 74 auf. Der Flanschrand weist dabei wiederum eine mittige Öffnung 76 auf, welche konzentrisch mit der Durchgangsbohrung 18 des Hauptteils 50 ausgerichtet ist. Der Durchmesser der Öffnung 76 entspricht dabei dem Durchmesser der Führungsabschnitte 20, 22, 24, 26, 28 und 30, sodass die Öffnung 76 des Befestigungselements 52 die Führung einer Ventilnadel in der Führungsbuchse 16 unterstützt. Zwischen dem Flanschrand 74 und einer Oberseite 78 des Hauptteils 50 ist in der dargestellten Ausführungsform ein ringförmiges Dichtungselement 80 angeordnet. Bei dem Dichtungselement 80 kann es sich beispielsweise um einen Dichtungsring aus einem Elastomer handeln. Dabei ist es vorteilhaft ein Elastomer zu wählen, welches den üblicherweise in Spritzgießvorrichtungen vorherrschenden hohen Temperaturen widerstehen kann, ohne dass das Elastomer spröde wird oder schmilzt.

Das Befestigungselement 52 besitzt ferner ein Außengewinde 54, das in ein korrespondierendes Innengewinde 56 der Aussparung 48 eingreifen kann. Zur Befestigung der Führungsbuchse 16 in der Verteilerplatte 10 wird zunächst die Führungsbuchse 10 in die Aussparung 48 der Verteilerplatte 10 eingesetzt, sodass die Führungsbuchse mit ihrem Flansch 46 auf dem Boden 58 der Aussparung 48 aufliegt. Anschließend wird das Dichtungselement 80 an der Oberseite 78 des Hauptteils 50 der Führungsbuchse 16 angeordnet. Alternativ kann das Dichtungselement 80 auch in dem Befestigungselement 52 angeordnet werden. Das Befestigungselement 52 wird dann in die Aussparung 48 und damit in die Verteilerplatte 10 eingedreht. Dabei gleitet das Befestigungselement 52 mit seiner Innenwand 68 entlang eines Außenumfangs des Halsabschnitts 70, bis das Befestigungselement 52 mit seinem unteren Rand auf den Flansch 46 des Hauptteils 50 trifft. Durch weiteres Eindrehen des Befestigungselements 52 in die Aussparung 48 übt das Befestigungselement 52 eine Kraft auf den Flansch 46 in Richtung auf den Boden 58 der Aussparung 48 aus. Der Boden 58 der Aussparung 48 und die (nicht näher bezeichnete) Unterseite des Flansches 46 liegen dann formschlüssig so aufeinander, dass die Führungsbuchse 16 nicht nur in der Verteilerplatte 10 fixiert, sondern zugleich auch über eine Fläche senkrecht zur Längsachse L abgedichtet ist.

Wird das Befestigungselement 52 in die Aussparung 48 eingeschraubt, übt der Flanschrand 74 ab einer gewissen Einschraubtiefe eine Kraft in axialer Richtung auf das Dichtungselement 80 aus und drückt es gegen die Oberseite 78 des Hauptteils 50. Aufgrund der elastischen Eigenschaften des Dichtungselements 80 dehnt sich das Dichtungselement 80 dabei in radialer Richtung aus. Befindet sich hierbei eine Verschlussnadel in der Durchgangsbohrung 18, wird das Dichtungselement 80 gegen die Verschlussnadel gepresst. Hierdurch vergrößert sich aufgrund der Elastizität des Dichtungselements 80 die Auflagefläche des Dichtungselements 80 auf der Oberfläche der Verschlussnadel, wodurch eine zusätzliche, effiziente Dichtung geschaffen wird. Dabei kann durch die die Differenz zwischen der Länge des Befestigungselements 52 und der Länge des Halsabschnitts 70 festgelegt werden, wie stark das Dichtungselement 80 beim Einschrauben des Befestigungselements 52 komprimiert wird.

Unter dem Flansch 46 weist der Hauptteil 50 (in Richtung der Nadelverschlussdüse) einen weiteren Halsabschnitt 60 auf, dessen Außendurchmesser ebenfalls kleiner ist, als der Außendurchmesser des Flansches 46. Die Wandstärke W des Führungsabschnittes 20, der am unteren Ende des Halsabschnittes 60 ausgebildet ist, ist bevorzugt kleiner als die Wandstärke U des Halsabschnittes 60. Zudem bildet der Außenumfang 62 im Bereich des Führungsabschnittes 20 auf der Höhe des Innenumfangs 64 eine Schrägfläche, vorzugsweise eine Kegelfläche, so dass die Wandstärke W zur Nadelverschlussdüse hin noch weiter abnimmt.

Zur Aufnahme des Halsabschnitts 60 in der Verteilerplatte 10 ist zwischen der Aussparung 48 und dem Strömungskanal 12 eine Durchgangsbohrung 66 eingebracht, deren Innendurchmesser im Wesentlichen dem Außendurchmesser des Abschnitts 60 entspricht. Dieser reicht bis an den Strömungskanal 12 heran, wobei der Führungsabschnitt 20 mit seinem die Verschlussnadel umschließenden Umfang 64 und seiner Kegelfläche radial und konzentrisch zur Längsachse L in den Strömungskanal 12 hineinragt. Der Führungsabschnitt 20 für die Verschlussnadel liegt damit vollständig im Massestrom, wobei die Schräg- bzw. Kegelfläche eine Kontaktfläche für das Material bildet, die - ebenso wie die Verschlussnadel - im Strömungskanal 12 allseits von dem zu verarbeitenden Material umspült wird.

Die Funktionsweise der führenden und dichtenden Führungsbuchse 16 basiert im Wesentlichen auf der elastisch verformbaren Wandung des im Strömungskanal 12 liegenden Führungsabschnittes 20. Wird die Verschlussnadel geöffnet, gleitet diese zunächst innerhalb der Führungsbuchse 16 ungehindert von der Schließstellung in die Öffnungsstellung, wobei die Führungsabschnitte 20, 22, 24, 26, 28 und 30 mit geringem Bewegungsspiel am Außenumfang der Nadel entlang gleiten. Hat diese ihre End- bzw. Öffnungsstellung erreicht, wird der Spritzdruck aufgebaut, d. h. die zu verarbeitende Schmelze wird mit hohem Druck durch den Strömungskanal 12 hindurch in das Formnest gepresst. Dabei umströmt die fließfähige Masse die Verschlussnadel und den geneigten Außenumfang 62 des Führungsabschnittes 20 gleichmäßig von allen Seiten, wobei der Führungsabschnitt 20 aufgrund seiner relativ geringen Wandstärke verpresst wird.

Der zylindrische Innenumfang 64 legt sich wie ein Schließ- oder Ventilelement formschlüssig und dichtend gegen den Außenumfang der Verschlussnadel, so dass während des Spritzvorgangs kein Material mehr von dem Strömungskanal 12 in die Erweiterungsabschnitte 34, 36, 38, 40 und 42 der Führungsbuchse 16 eindringen kann. Die Abdichtung der Verschlussnadel ist damit gegenüber herkömmlichen Konstruktionen deutlich verbessert, weil im Zeitpunkt der hohen Druckbelastung im Strömungskanal 12 kein Material mehr durch die Führungsbuchse 16 hindurch aus dem Werkzeug nach außen dringen kann. Gleichzeitig wird die Nadel konzentrisch zur Längsachse L in ihrer Lage fixiert. Sie kann durch das strömende Material auch nicht mehr aus ihrer Mittellage ausgelenkt werden, was sich günstig auf die Strömungsverhältnisse im Strömungskanal 12 auswirkt.

Ist der Spritzzyklus beendet, baut sich der Druck im Strömungskanal 12 wieder ab. Der Führungsabschnitt 20 nimmt aufgrund seiner Elastizität wieder seine ursprüngliche Form an und der Innenumfang 64 des Führungsabschnitts löst sich vom Außenumfang der Verschlussnadel. Diese kann ungehindert in die Schließstellung bewegt werden.

Man erkennt, dass die Wandstärke W des bevorzugt aus einem Stahlwerkstoff gefertigten Führungsabschnitts 20 so gewählt ist, dass diese im Elastizitätsbereich des Materials formbar ist und dass dabei das geringere Bewegungsspiel zwischen der Verschlussnadel und dem Innenumfang 64 durch den Materialdruck überwunden wird, so dass während der Hochdruckphase im Werkzeug die Nadel mittig arretiert ist und kein Material nach außen dringen kann. Dennoch wird die Nadel zwischen den einzelnen Druckzyklen innerhalb der Führungsabschnitte 20, 22, 24, 26, 28 und 30 präzise geführt.

Die Erweiterungsabschnitte 34, 36, 38, 40 und 42 dienen dazu, wie zuvor bereits beschrieben, flüssiges Material aufzunehmen, das im Wesentlichen eine schmierende Führung der Ventilnadel ermöglichen soll. Aufgrund der Tatsache, dass eine Mehrzahl von Erweiterungsabschnitten 34, 36, 38, 40 und 42 ausgebildet ist, wird in Fig. 1 ein abnehmendes Druckgefälle in der Führungsbuchse 16 von unten aufwärts erzeugt, wodurch das flüssige Material daran gehindert wird, aufwärts die Führungsbuchse 16 zu passieren und aus der Führungsbuchse auszutreten. Da die Erweiterungsabschnitte 34, 36, 38, 40 und 42 in der Führungsbuchse 16 und nicht in der Ventilnadel ausgebildet sind, wird der sich in diesen befindende Kunststoff während der Auf- und Abwärtsbewegung der Ventilnadel nicht mitbewegt, so dass keine oder nur eine geringe Pumpwirkung erzeugt wird. Die zusätzliche Abdichtung durch das vorgespannte Dichtungselement 80 wird dabei ein austreten von flüssigem Material aus der Oberseite der Führungsbuchse 16 effektiv verhindert.

Zur Demontage der Führungsbuchse 16 aus der Verteilerplatte 10 kann wie folgt vorgegangen werden. Zunächst wird das Befestigungselement 52 aus der Aussparung 48 herausgedreht. Anschließend wird das Dichtungselement 80 entfernt, sofern es nicht in dem Befestigungselement 52 festgelegt war und zusammen mit dem Befestigungselement 52 aus der Aussparung 48 herausgedreht wurde. Anschließend kann der Hauptteil 50 der Führungsbuchse 16 aus der Aussparung 48 herausgezogen werden. Häufig ist hier jedoch das Problem, dass sich im Laufe des Betriebs der Hauptteil 50 bzw. dessen Halsabschnitt 60 in der Aussparung 48 festsetzt. Um dennoch ein Herausziehen des Hauptteils 50 aus der Aussparung 48 zu ermöglichen, weist die Führungsbuchse an ihrem oberen Halsabschnitt 50 ein Außengewinde 72 auf. Auf das Außengewinde 72 kann ein nicht dargestellte Entnahmeelement, beispielsweise ein Griff, aufgeschraubt werden, welcher ein Herausziehen des Hauptteils 50 aus der Aussparung 48 erleichtert.

**Bezugszeichenliste**

| | | | |
|---|---|---|---|
| 10 | Verteilerplatte | 52 | Befestigungselement |
| 12 | Strömungskanäle | 54 | Außengewinde |
| 14 | Unterseite | 56 | Innengewinde |
| 16 | Führungsbuchse | 58 | Boden |
| 18 | Durchgangsbohrung | 60 | Halsabschnitt |
| 20 | Führungsabschnitt | 62 | Außenumfang |
| 22 | Führungsabschnitt | 64 | Innenumfang |
| 24 | Führungsabschnitt | 66 | Durchgangsbohrung |
| 26 | Führungsabschnitt | 68 | Innenwand |
| 28 | Führungsabschnitt | 70 | Halsabschnitt |
| 30 | Führungsabschnitt | 72 | Außengewinde |
| 34 | Erweiterungsabschnitt | 74 | Flanschrand |
| 36 | Erweiterungsabschnitt | 76 | Öffnung |
| 38 | Erweiterungsabschnitt | 78 | Oberseite |
| 40 | Erweiterungsabschnitt | 80 | Dichtungselement |
| 42 | Erweiterungsabschnitt | L | Längsachse |
| 46 | Flansch | U | Wandstärke |
| 48 | Aussparung | W | Wandstärke |
| 50 | Hauptteil | | |

## Patentansprüche

1. Führungsbuchse (16) zum Durchführen und Abdichten einer Verschlussnadel einer Nadelverschlussdüse einer Spritzgießvorrichtung,
a) mit einem Hauptteil (50) und einem Befestigungselement (52),
b) wobei der Hauptteil (50) eine Durchgangsöffnung (18) für die Verschlussnadel aufweist,
c) wobei die Durchgangsöffnung (18) wenigstens einen Führungsabschnitt (20, 22, 24, 26, 28, 30) aufweist, der die Verschlussnadel mit geringem Bewegungsspiel umfasst,
d) wobei die Durchgangsöffnung (18) wenigstens zwei Erweiterungsabschnitte (34, 36, 38, 40, 42) aufweist, deren Durchmesser jeweils größer ist als derjenige des wenigstens einen Führungsabschnitts (20, 22, 24, 26, 28, 30),
e) wobei der Hauptteil (50) der Führungsbuchse (16) einen verbreiterten Flansch (46) hat und über dem Flansch (46) einen im Außendurchmesser kleineren Halsabschnitt (70) aufweist, der koaxial von dem Befestigungselement (52) umschlossen ist,
f) wobei die Führungsbuchse (16) ferner das Befestigungselement (52) aufweist, das an dem Hauptteil (50) festlegbar ist, und
g) wobei das Befestigungselement (52) als Schraubbuchse ausgebildet ist und eine hohlzylindrische Grundform aufweist,
**dadurch gekennzeichnet**,
h) dass zwischen dem Befestigungselement (52) und dem Hauptteil (50) ein Dichtungselement (80) angeordnet ist, welches an einer in die Durchgangsöffnung (18) eingesetzten Verschlussnadel vollumfänglich anliegt,
i) dass das Befestigungselement (52) an seiner Oberseite einen umlaufenden Flanschrand (74) mit einer mittigen Öffnung (76) aufweist, welche konzentrisch mit der Durchgangsbohrung (18) des Hauptteils (50) ausgerichtet ist,
j) wobei der Durchmesser der Öffnung (76) dem Durchmesser der Führungsabschnitte (20, 22, 24, 26, 28 und 30) entspricht, und
k) wobei das Dichtungselement (80) zwischen dem Flanschrand (74) und einer Oberseite (78) des Hauptteils (50) angeordnet ist.

2. Führungsbuchse (16) nach Anspruch 1, **dadurch gekennzeichnet, dass** das Befestigungselement (52) zumindest abschnittsweise hohlzylindrisch ausgebildet ist und auf einer äußeren Mantelfläche ein Außengewinde (54) aufweist.

3. Führungsbuchse (16) nach einem der vorhergehenden Ansprüche, **dadurch gekennzeichnet, dass** das Befestigungselement (52) einen umlaufenden Flanschrand (74) aufweist, wobei der Flanschrand (74) dazu ausgebildet ist, bei Festlegung des Befestigungselement (52) an dem Hauptteil (50) das Dichtungselement (80) mit einer Kraft in Richtung auf den Hauptteil (50) zu beaufschlagen.

4. Führungsbuchse (16) nach einem der vorhergehenden Ansprüche, **dadurch gekennzeichnet, dass** das Dichtungselement (80) aus einem Elastomer besteht.

5. Führungsbuchse (16) nach einem der vorhergehenden Ansprüche, **dadurch gekennzeichnet, dass** das Dichtungselement (80) ringförmig ist.

6. Führungsbuchse (16) nach einem der vorhergehenden Ansprüche, **dadurch gekennzeichnet, dass** der Hauptteil (50) und/oder das Befestigungselement (52) jeweils einteilig ausgebildet sind.

7. Führungsbuchse (16) nach einem der vorhergehenden Ansprüche, **dadurch gekennzeichnet, dass** der Hauptteil (50) ein Außengewinde (72) aufweist.

8. Spritzgießvorrichtung mit einer Verteilerplatte (10), in der wenigstens ein Strömungskanal (12) für ein fließfähiges Material ausgebildet ist, mit wenigstens einer Nadelverschlussdüse, durch die das fließfähige Material unter Fortführung des Strömungskanals (12) einem trennbaren Formeinsatz zuführbar ist, mit wenigstens einer Verschlussnadel, die den Strömungskanal (12) zumindest abschnittsweise längsverschieblich durchsetzt und die mittels eines Antriebs in eine Öffnungs- und in eine Schließstellung bringbar ist, und mit einer Führungsbuchse (16) nach einem der vorhergehenden Ansprüche.

9. Spritzgießvorrichtung nach Anspruch 8, **dadurch gekennzeichnet, dass** ein Führungsabschnitt (20) der Führungsbuchse (16) zumindest abschnittsweise im Strömungskanal (12) liegt.

10. Spritzgießvorrichtung nach Anspruch 9, **dadurch gekennzeichnet, dass** der Führungsabschnitt (20) wenigstens eine Kontaktfläche (62) für das fließfähige Material hat oder bildet, die zumindest abschnittsweise im Strömungskanal (12) liegt.

11. Spritzgießvorrichtung nach Anspruch 10, **dadurch gekennzeichnet, dass** die Kontaktfläche (62) vom Außenumfang des Führungsabschnitts (20) gebildet ist.

12. Spritzgießvorrichtung nach Anspruch 10 oder 11, **dadurch gekennzeichnet, dass** die Kontaktfläche (62) eine Schrägfläche ist, vorzugsweise eine Kegelfläche.

13. Spritzgießvorrichtung nach einem der Ansprüche 8 bis 12, **dadurch gekennzeichnet, dass** die Führungsbuchse (16) ein separat austauschbares Bauelement ist.

14. Spritzgießvorrichtung nach einem der Ansprüche 8 bis 13, **dadurch gekennzeichnet, dass** die Führungsbuchse (16) an und/oder in der Verteilerplatte (10) festlegbar ist.

15. Spritzgießvorrichtung nach einem der Ansprüche 8 bis 14, **dadurch gekennzeichnet, dass** die Führungsbuchse (16) in einer Aussparung (48) in der Verteilerplatte (10) und/oder in der Nadelverschlussdüse sitzt.

## Claims

1. Guide bushing (16) for guiding and sealing a shut-off needle of a needle shut-off nozzle for injection moulding apparatus,
a) with a main body (50) and a fastening element (52),
b) wherein the main body (50) has a through-opening (18) for the shut-off needle,
c) wherein the through-opening (18) has at least one guide section (20, 22, 24, 26, 28, 30), which secures the shut-off needle with a small amount of play,
d) wherein the through-opening (18) has at least two extension sections (34, 36, 38, 40, 42), the diameter of which, in each case, is greater than that of at least one guide section (20, 22, 24, 26, 28, 30),
e) wherein the main body (50) of the guide bushing (16) has a widened flange (46) and above the flange (46) has a small neck section (70) in the outer diameter, which is coaxially enclosed by the fastening element (52),
f) wherein the guide bushing (16) also has the fastening element (52), which can be secured to the main body (50), and
g) wherein the fastening element (52) is designed as a threaded bushing and has a hollow cylindrical basic form,
**characterised in that,**
h) a sealing element (80), which rests entirely on a shut-off needle inserted into the through-opening (18), is positioned between the fastening element (52) and the main body (50),
i) the upper surface of the fastening element (52) has a peripheral flange rim (74) with a central opening (76), which is aligned concentrically with the through-opening (18) of the main body (50),
j) wherein the diameter of the opening (76) corresponds to the diameter of the guide sections (20, 22, 24, 26, 28 und 30), and
k) wherein the sealing element (80) is positioned between the flange rim (74) and an upper surface (78) of the main body (50).

2. Guide bushing (16) according to claim 1, **characterised in that** at least some sections of the fastening element (52) have a hollow cylindrical form and an external thread (54) on an outer lateral surface.

3. Guide bushing (16) according to any one of the preceding claims, **characterised in that** the fastening element (52) has a peripheral flange rim (74), wherein the flange rim (74) is designed, when fixing the fastening element (52) to the main body (50), to forcefully compress the sealing element (80) in the direction of the main body (50).

4. Guide bushing (16) according to any one of the preceding claims, **characterised in that** the sealing element (80) consists of an elastomer.

5. Guide bushing (16) according to any one of the preceding claims, **characterised in that** the sealing element (80) is ring-shaped.

6. Guide bushing (16) according to any one of the preceding claims, **characterised in that** the main body (50) and/or the fastening element (52) are each formed of one piece.

7. Guide bushing (16) according to any one of the preceding claims, **characterised in that** the main body (50) has an external thread (72).

8. Injection moulding apparatus with a distributor plate (10), in which at least one flow channel (12) for a flowable material is constructed, with at least one needle shut-off nozzle, by means of which the flowable material, in a continuation of the flow channel (12), can be fed into a separable mould insert, with at least one shut-off needle, which penetrates at least sections of the flow channel (12) lengthways and which can be placed in an open and a closed position by means of a drive, and with a guide bushing (16) according to any one of the preceding claims.

9. Injection moulding apparatus according to claim 8, **characterised in that** a guide section (20) of the guide bushing (16) is positioned at least in sections in the flow channel (12).

10. Injection moulding apparatus according to claim 9, **characterised in that** the guide section (20) has or forms at least one contact surface (62) for the flowable material, sections of which at least are positioned in the flow channel (12).

11. Injection moulding apparatus according to claim 10, **characterised in that** the contact surface (62) is formed from the outer circumference of the guide section (20).

12. Injection moulding apparatus according to claim 10 or 11, **characterised in that** the contact surface (62) is an oblique surface, preferably a tapered surface.

13. Injection moulding apparatus according to one of the claims 8 to 12, **characterised in that** the guide bushing (16) is a separately replaceable component.

14. Injection moulding apparatus according to one of the claims 8 to 13, **characterised in that** the guide bushing (16) can be secured to and/or in the distributor plate (10).

15. Injection moulding apparatus according to one of the claims 8 to 14, **characterised in that** the guide bushing (16) is seated in a recess (48) in the distributor plate (10) and/or in the needle shut-off nozzle.

## Revendications

1. Manchon de guidage (16) pour réaliser le passage et l'étanchéité d'une aiguille d'obturateur d'une buse d'obturateur à aiguille d'un dispositif de moulage par injection,
a) avec une partie principale (50) et un élément de fixation (52),
b) dans lequel la partie principale (50) comporte une ouverture de passage (18) pour l'aiguille d'obturateur,
c) dans lequel l'ouverture de passage (18) comporte au moins une section de guidage (20, 22, 24, 26, 28, 30) qui entoure l'aiguille d'obturateur avec un petit jeu de mouvement,
d) dans lequel l'ouverture de passage (18) comporte au moins deux sections élargies (34, 36, 38, 40, 42) dont le diamètre est à chaque fois plus grand que celui de l'au moins une section de guidage (20, 22, 24, 26, 28, 30),
e) dans lequel la partie principale (50) du manchon de guidage (16) a un collet élargi (46) et comporte au-dessus du collet (46) une section de col (70) qui a un diamètre extérieur plus petit et qui est entourée de façon coaxiale par l'élément de fixation (52),
f) dans lequel le manchon de guidage (16) comporte de plus l'élément de fixation (52) qui peut être fixé à la partie principale (50), et
g) dans lequel l'élément de fixation (52) est réalisé sous forme de douille filetée et a une forme fondamentale cylindrique creuse,
**caractérisé en ce que**
h) un élément d'étanchéité (80) qui s'appuie par toute sa périphérie contre une aiguille d'obturateur placée dans l'ouverture de passage (18) est agencé entre l'élément de fixation (52) et la partie principale (50),
i) l'élément de fixation (52) comporte sur son côté supérieur un bord de collet périphérique (74) avec une ouverture centrale (76) qui est concentrique avec le trou de passage (18) de la partie principale (50),
j) le diamètre de l'ouverture (76) correspond au diamètre des sections de guidage (20, 22, 24, 26, 28 et 30), et
k) l'élément d'étanchéité (80) est agencé entre le bord de collet (74) et un côté supérieur (78) de la partie principale (50).

2. Manchon de guidage (16) selon la revendication 1, **caractérisé en ce que** l'élément de fixation (52) est réalisé au moins partiellement cylindrique creux et comporte un filetage extérieur (54) sur sa surface enveloppante extérieure.

3. Manchon de guidage (16) selon l'une quelconque des revendications précédentes, **caractérisé en ce que** l'élément de fixation (52) comporte un bord de collet périphérique (74), lequel bord de collet (74) est réalisé pour, lors de la fixation de l'élément de fixation (52) à la partie principale (50), soumettre l'élément d'étanchéité (80) à une force en direction de la partie principale (50).

4. Manchon de guidage (16) selon l'une quelconque des revendications précédentes, **caractérisé en ce que** l'élément d'étanchéité (80) est en élastomère.

5. Manchon de guidage (16) selon l'une quelconque des revendications précédentes, **caractérisé en ce que** l'élément d'étanchéité (80) est annulaire.

6. Manchon de guidage (16) selon l'une quelconque des revendications précédentes, **caractérisé en ce que** la partie principale (50) et/ou l'élément de fixation (52) sont réalisés chacun d'une seule pièce.

7. Manchon de guidage (16) selon l'une quelconque des revendications précédentes, **caractérisé en ce que** la partie principale (50) comporte un filetage extérieur (72).

8. Dispositif de moulage par injection avec une plaque distributrice (10), dans laquelle au moins un canal d'écoulement (12) est réalisé pour un matériau fluide, avec au moins une buse d'obturateur à aiguille par laquelle le matériau fluide peut être amené à un moule séparable en suivant le canal d'écoulement (12), avec au moins une aiguille d'obturateur qui traverse le canal d'écoulement (12) au moins en partie en une translation longitudinale et qui peut être mise dans une position d'ouverture et dans une position de fermeture au moyen d'un entraînement, et avec un manchon de guidage (16) selon l'une quelconque des revendications précédentes.

9. Dispositif de moulage par injection selon la revendication 8, **caractérisé en ce qu**'une section de guidage (20) du manchon de guidage (16) se trouve au moins en partie dans le canal d'écoulement (12).

10. Dispositif de moulage par injection selon la revendication 9, **caractérisé en ce que** la section de guidage (20) a ou forme au moins une surface de contact (62) pour le matériau fluide, laquelle surface de contact se trouve au moins en partie dans le canal d'écoulement (12).

11. Dispositif de moulage par injection selon la revendication 10, **caractérisé en ce que** la surface de contact (62) est formée par la circonférence extérieure de la section de guidage (20).

12. Dispositif de moulage par injection selon la revendication 10 ou 11, **caractérisé en ce que** la surface de contact (62) est une surface inclinée, de préférence une surface conique.

13. Dispositif de moulage par injection selon l'une quelconque des revendications 8 à 12, **caractérisé en ce que** le manchon de guidage (16) est une pièce remplaçable séparément.

14. Dispositif de moulage par injection selon l'une quelconque des revendications 8 à 13, **caractérisé en ce que** le manchon de guidage (16) peut être fixé à et/ou dans la plaque distributrice (10).

15. Dispositif de moulage par injection selon l'une quelconque des revendications 8 à 14, **caractérisé en ce que** le manchon de guidage (16) siège dans un évidement (48) dans la plaque distributrice (10) et/ou dans la buse d'obturateur à aiguille.
